# EUROPEAN PATENT SPECIFICATION

(11) **EP 2 746 692 B1**
(45) Date of publication and mention of the grant of the patent: **01.02.2017**
(21) Application number: 13198546.7
(22) Date of filing: 19.12.2013
(51) Int. Cl.: F24J 2/04, F24J 2/26, F24J 2/30, F24J 2/34, F24J 2/44

(54) **Natural circulation solar system integrated within a solar collector, and a system comprising a plurality of said collectors**
Solaranlage mit natürlicher Zirkulation integriert in einem Sonnenkollektor und ein System mit einer Vielzahl von Kollektoren
Installation solaire avec circulation naturelle intégrée dans un panneau solaire et un système comprenant une pluralité de panneaux

(30) Priority: 20.12.2012 IT RM20120655
(43) Date of publication of application: 25.06.2014
(73) Proprietor: Cordivari S.r.L., 64020 Morro d'Oro (TE) (IT)
(72) Inventor: Bonolis, Alessandro, 64020 MORRO D'ORO (TE) (IT); Cordivari, Ercole, 64020 MORRO D'ORO (TE) (IT)
(74) Representative: Iannone, Carlo Luigi

(56) References cited:
- WO-A1-2013/182916
- JP-A- S5 971 948
- US-A- 3 039 453
- US-A- 3 919 998
- US-A- 4 214 574
- US-A- 4 483 322

## Description

The present invention relates to an improved natural circulation solar system fully integrated within a solar collector, and to a system comprising natural circulation solar collectors.

More specifically, the invention concerns a solar system of the above kind, completely integrated within a solar collector, with surface dimensions which are typical of a solar collector and a reduced thickness, having accumulation reservoir contained within the solar collector, and thus not visible from outside and not provided on the rear of the collector, but containing all the system inside, thus being very compact, and a system comprising a plurality of said solar collectors, without visible reservoirs and with reduced dimensions.

As it is well known, a standard solar system comprises an absorber, comprised of a copper sheet, or of other thermally conductive material, having welded tubes, taking solar energy and transferring the same to the primary heat carrier fluid, usually glycol, flowing along the welded tubes.

A secondary fluid (mainly sanitary water) is contained within an accumulation reservoir, provided with a heat exchanger, within which said primary fluid flows, transferring heat to the secondary fluid.

Further, natural circulation systems exist, the operation principle of which providing a primary heat carrier fluid circulating between an absorber and an accumulation reservoir, within which heat exchange occurs, without the help of circulation means, such as pumps, but thanks to the natural raising of the hot fluid.

Said kind of natural circulation system, even if characterised by positive features, such as the operation without the need of other energetic sources besides solar irradiation, has a series of drawbacks, among which presence of an accumulation reservoir, outside the solar collector, with a remarkable aesthetic impact and not respected ambient/environmental requirements. Further, installer must mount on structures either collector and reservoir and further properly connecting either water secondary circuit and glycol primary circuit, natural circulation of which only occurs if circuit has been properly realised.

A progress in natural circulation collector technology is the realisation of natural circulation collectors with reservoir hidden behind the collector.

Said solution is rather compact and easy to be installed (it is only necessary connecting the secondary circuit, the primary one being integrated), but has some drawbacks, such as possibility of installation only on horizontal plane surfaces (by structures maintaining the collector in an inclined position), a bad aesthetic aspect, and possibility of a reverse circulation overnight, thus dispersing heat.

A further known solution is the one comprised of direct irradiation solar collectors, not providing primary fluid, since accumulated sanitary water is directly exposed to the sun irradiation.

Said solution does not provide absorber, exchanger and transfer tubes, so that its structure is simplified with respect to the above natural circulation solar systems.

Further, direct irradiation solar collectors can be also installed on pitched roofs, thus yielding a good aesthetic result and a low environmental impact.

A similar solution is disclosed in patent US 4,214,574.

However, they are characterised by low efficiency, high heat dispersion due to direct exposition outside the accumulation reservoir, the latter being at least partially without insulation, as well as by risk of breakage caused by ice formation within the same accumulation reservoir. Thus, they provide an electric resistance connected to a thermostat that, when outer temperature diminishes, heats water in order to prevent ice formation and breaking of the collector.

Furthermore patent US 3,039,453 discloses a heat exchanger comprising two circuits for the circulation of two fluids, however also in this solution they are directly exposed to solar radiation and thus at risk of being over-exposed to solar radiation or of freezing in winter season.In view of the above, the Applicant has realised an innovative solar system permitting overcoming drawbacks of the technological solutions described in the above.

Particularly, it is suggested according to the present invention a natural circulation solar system, and the relevant solar collector system, having accumulation and expansion element integrated within the solar collector, thus obtaining a very compact structure.

It is therefore specific object of the present invention a solar collector comprising a natural circulation solar system within a containment box structure, having a lower face, four perimeter faces and an upper face closed by a transparent surface, said natural circulation solar system comprising: an upper absorber, to be exposed to solar irradiation, provided under said transparent surface, an accumulation and natural circulation primary circuit of a primary thermal carrier fluid, at least a secondary abduction, withdrawal and natural circulation conduct, of a secondary fluid, and at least a heat exchanger for exchanging heat between said primary heat carrier fluid and said secondary fluid, said at least a secondary conduct comprising at least an inlet opening and an outlet opening of said secondary fluid that can be reached from outside said containment box structure, said primary circuit providing at least a first portion, thermally communicating with said upper absorber and provided under it, and at least a second portion thermally communicating with said at least a secondary conduct in correspondence of said heat exchanger, said
second portion and said at least a secondary conduct being provided under said at least a first portion, and an insulating material layer being provided between at least a first portion of said primary circuit and said at least a secondary conduct so that, when said primary heat carrier fluid flows by natural circulation within said primary circuit, said primary thermal carrier fluid and said secondary fluid circulate with a counter-current circulation within said heat exchanger.

Preferably, according to the invention, said at least one insulating layer can completely wrap said secondary conduct so as to thermally insulate the same.

Still according to the invention, said absorber can be comprised of thermally conductive material, preferably copper or aluminium.

Further, according to the invention, said accumulation and natural circulation primary circuit of a primary heat carrier fluid can provide an expansion reservoir, directly connected to said primary circuit.

Always according to the invention, said primary circuit can provide a check valve, preventing said primary thermal carrier fluid circulating according to an opposite direction with respect to the prevailing flow direction.

Particularly, according to the invention, said at least a secondary adduction, withdrawal and natural circulation conduct of a secondary fluid can provide a plurality of vessels, such as reservoirs, tubes, chambers and like, to accumulate secondary fluid and to let the same passing, and hydraulic connection elements between sand accumulation vessels.

As an alternative, according to the invention, said at least a secondary conduct can comprise a single accumulation and passage reservoir for said secondary fluid.

Further, according to the invention, said primary circuit can comprise a plurality of said first portions or conducts, manifolds for hydraulic coupling between said plurality of conducts and joint elements for coupling said plurality of first conducts and said at least a second portion of said primary circuit.

Still according to the invention, said primary circuit can comprise a plurality of said second portions or conducts, manifolds for hydraulic coupling between said plurality of second conducts and joint elements for coupling said plurality of second conducts and said at least a first portion of said primary circuit.

Furthermore, according to the invention, said at least a second portion of said primary circuit can be at least partially inserted within said at least a secondary conduct so as to be in direct thermal contact with said secondary fluid.

Further, it is an object of the present invention a solar collector system, characterized in that it provides, connected in series and/or in parallel, a plurality of solar collectors as described in the above.

The invention further relates to a solar collector system comprising solar collectors connected in series and/or in parallel to each other.

The present invention will be now described for illustrative, but not limitative, purposes, according to preferred embodiments, with particular reference to the figures of the enclosed drawings, wherein:
figure 1 is a first exploded view of a solar system according a first embodiment of the invention with a vertical arrangement;
figure 2 is a second exploded view of solar system according to the invention of figure 1;
figure 3 is a first perspective view of components of primary heat carrier fluid and secondary fluid circuits of solar system of figures 1 and 2;
figure 4 is a second perspective view of components of thermal exchange of solar system of figures 1 and 2;
figure 5 is a third perspective view of components of primary heat carrier fluid and secondary fluid circuits of solar system of figures 1 and 2;
figure 6 is an end view of a solar system according to the invention of figures 1 and 2;
figure 7 is a cross-section view of a solar system according to the invention of figures 1 and 2;
figure 8 is an exploded view of a first embodiment the natural circulation solar system according to the invention with a horizontal arrangement;
figures 9 and 10 are perspective views of components of primary heat carrier fluid and secondary fluid circuits of solar system of figures 8;
figure 11 is an exploded top view of a second embodiment of natural circulation solar system according to the invention with a vertical arrangement;
figure 12 is a bottom exploded view of solar system of figure 11;
figure 13 is an exploded top view of components of primary heat carrier fluid circuits of solar system of figure 11;
figure 14 is a top view of the heat exchange portion with counter-current circulation between primary heat carrier fluid and secondary fluid, wherein circulation direction within the relevant circuits are indicated, within the solar system of figure 11;
figure 15 is a cross-section view of solar system of figure 11;
figure 16 is a top exploded view of the second embodiment of natural circulation solar system according to the invention with a horizontal arrangement;
figure 17 is a bottom exploded view of the solar system of figure 16;and
figures 18a and 18b are axonometric views of a solar system comprising a plurality of solar systems according to one of the embodiments of figures 1 - 17, respectively according to a horizontal and vertical arrangement.

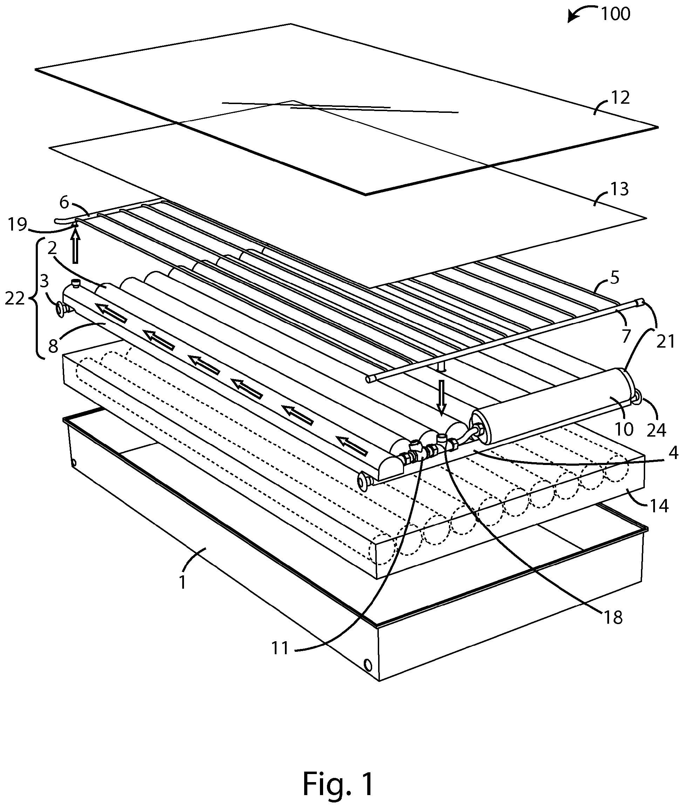

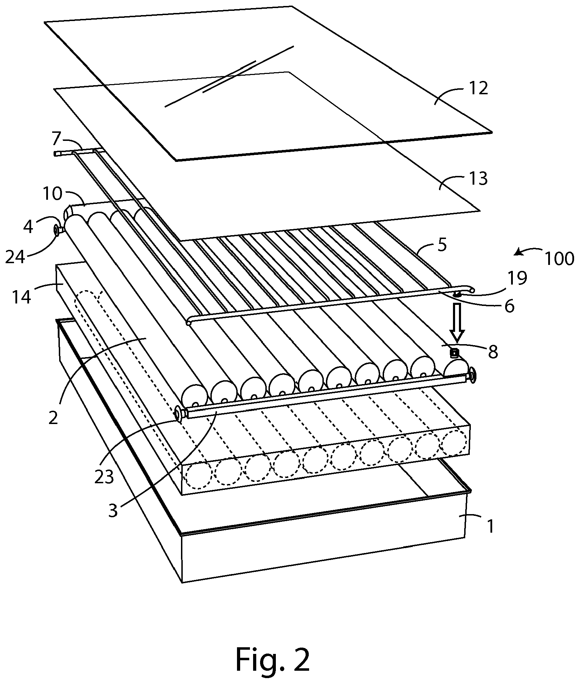

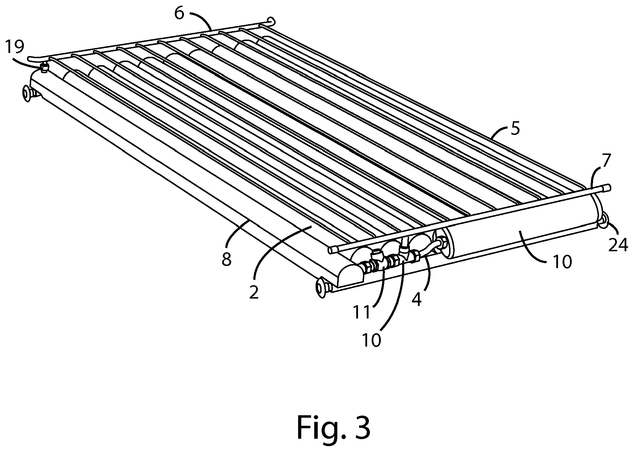

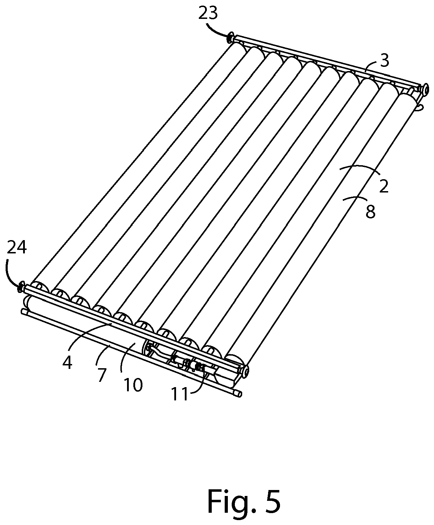

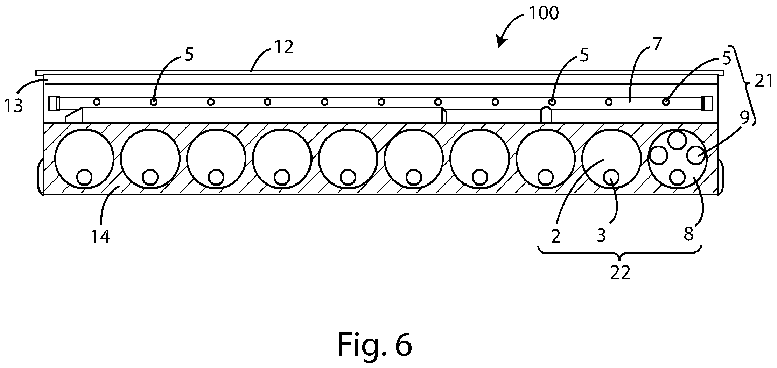

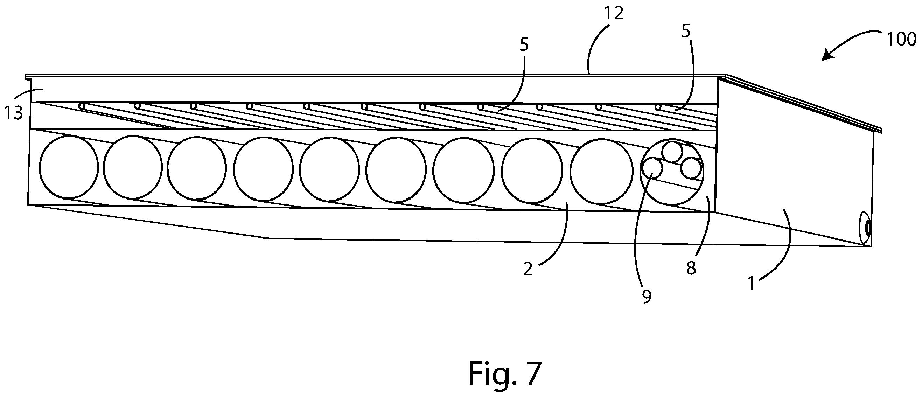

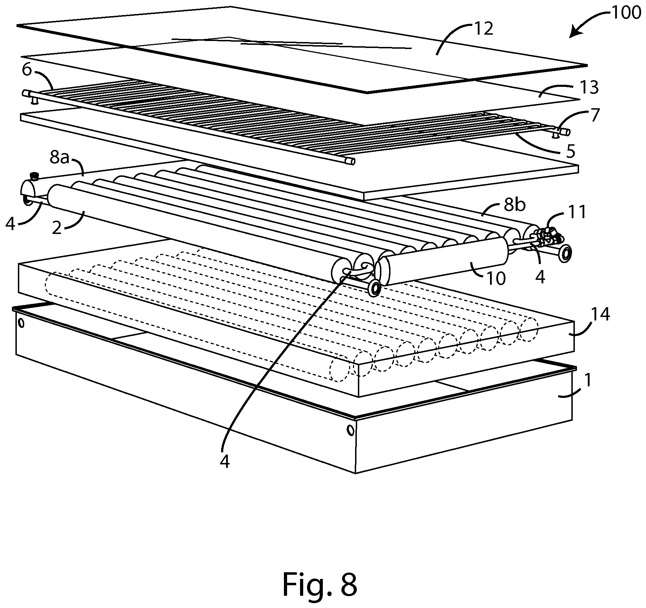

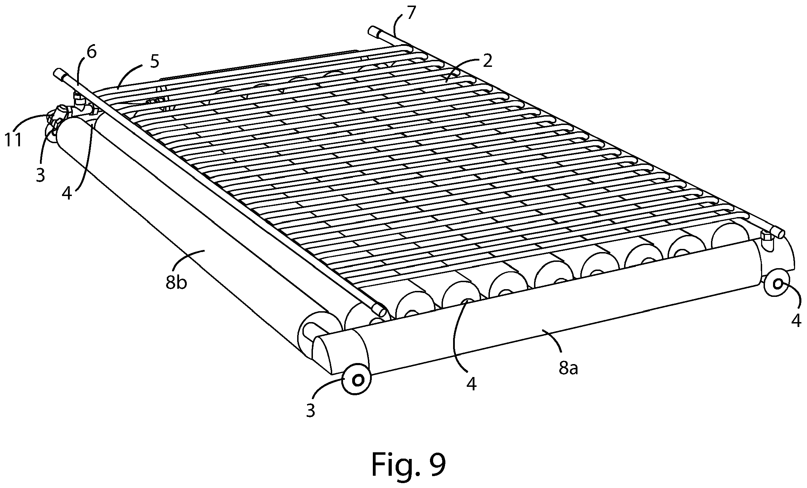

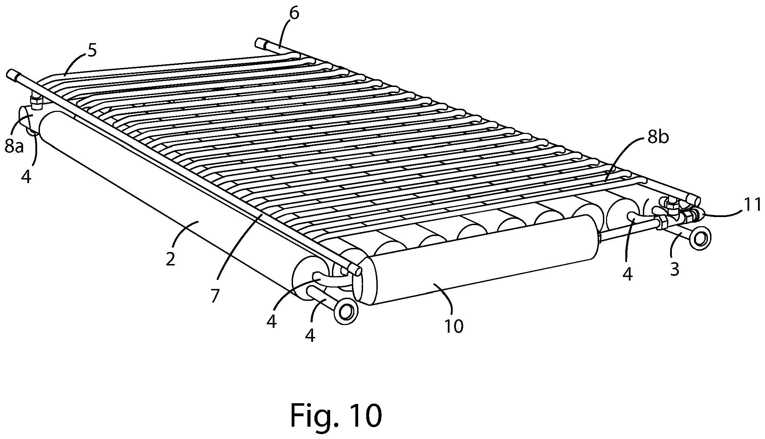

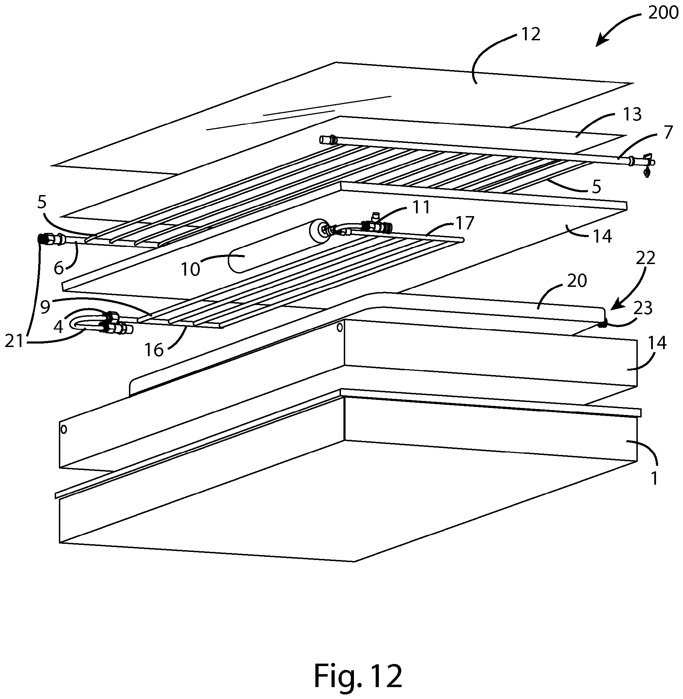

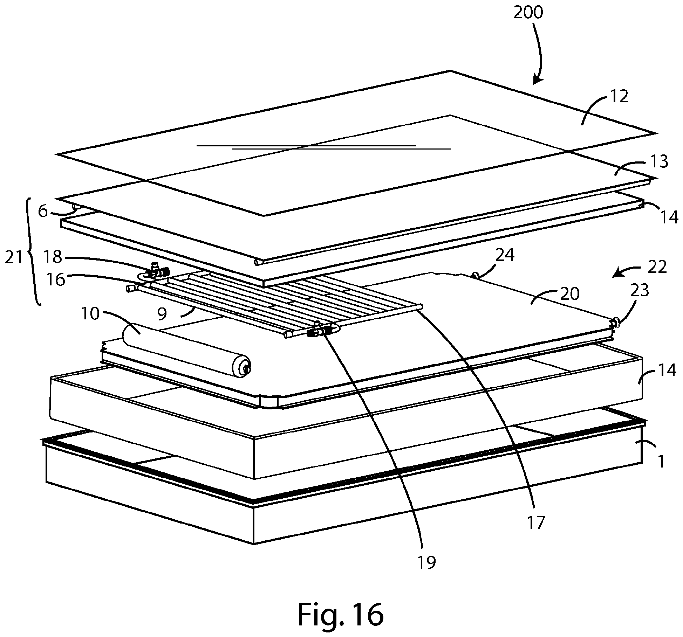

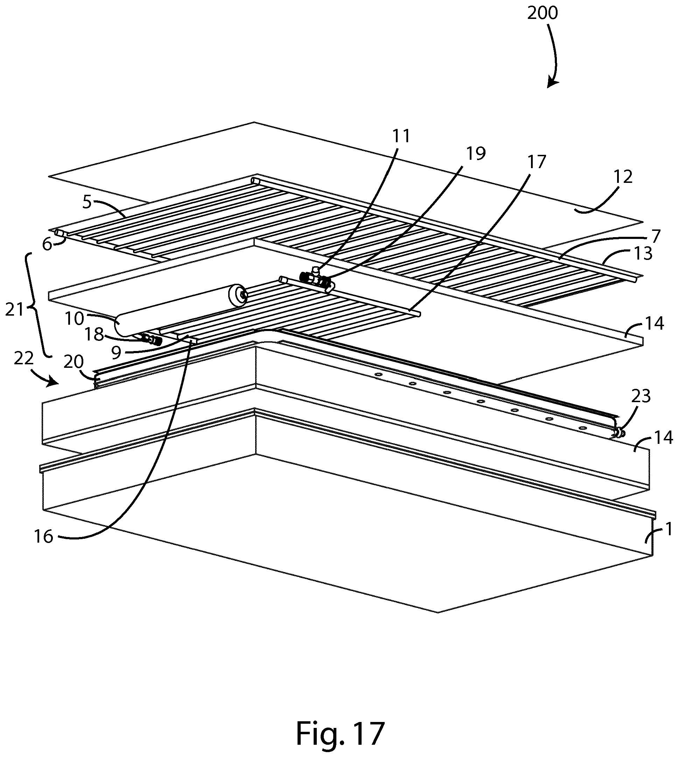

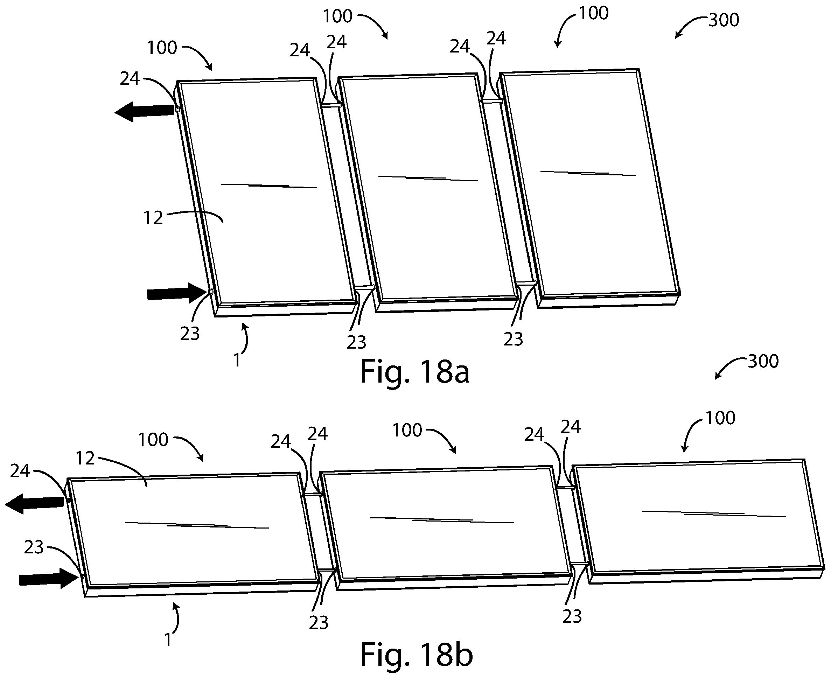

Making reference to figures 1 - 17 of the enclosed drawings, there are shown two embodiments of a solar system according to the invention, generically indicated by reference number 100 or 200. Collector 100 or 200 can be realised according to a vertical arrangement (figures 1 - 7 and figures 11 - 15 of the enclosed drawings) or horizontal (figures 8 - 19 and figures 16 - 17 of the enclosed drawings), can be connected in series or in parallel with other solar collectors 100 or 200, to realise a natural circulation solar collector 100 or 200 system 300, as shown in figures 18a and 18b.

It is well evident that natural circulation of a fluid within a circuit is activated when the circuit is inclined so that fluid, in the part of the circuit more exposed to solar irradiation, in the specific case the absorber, heating has a lower density thus raising, and in the portion not exposed to the irradiation, in the specific case the heat exchanger, fluid cools, increasing its density and thus descending. The above principle is the basis of the operation of the solar collector according to the invention.

Making reference to the single natural circulation collector 100 according to the first embodiment, it provides a containment structure 1, a plurality of tubes 2 for accumulating secondary fluid, in flow communication by relevant joints or connectors 3 and 4, a plurality of first conducts of tube 5 for passage of primary heat carrier fluid, being part of an absorber 5, 13 exposed to the sun irradiation and in flow communication by relevant collectors 6 and 7, at least a heat exchanger 8 (and, where present, 8a and 8b), in flow communication with said joints 3 and 4, thus creating the secondary fluid circulation system 22, a plurality of second conducts or tubes 9, inserted within said at least a heat exchanger 8 (or, where present, 8a and 8b in the horizontal arrangement), and in flow communication with said collectors 6 and 7 by joints 18 and 19, thus realising the circulation system 21 of the primary heat carrier fluid, possibly an expansion reservoir, directly connected with said circulation system 21 of the primary heat carrier fluid, a transparent surface 12, juxtaposed to said primary and secondary circulation systems, coupling above with said containment element 1.

All along the present specification, by the term "absorber" it is meant an element comprised of one or more absorbing surfaces, exposed to the solar irradiation or to another heat source, comprised of thermally conductive material (preferably copper, aluminium, ecc.) connected to the different vessels (tubes, chambers and like), wherein fluid, also indicated as heat carrier fluid, can flow, to which heat absorbed by the same absorber is transferred.

Further, a suitable insulation layer 14 is provided in said solar collector 100, eventually comprising a plurality of layers of different insulating material, thermally insulating from outside said tubes 2 for accumulating secondary fluid and said at least a heat exchanger 8 (or, where present, 8a and 8b), reducing thermal dispersion of absorber 5, 13.

As it can be observed, once assembled, solar system 100 according to the invention has, within the assembly comprised of the containment element 1 and absorbing glass 12, all the elements comprising a natural circulation solar system, including accumulation of secondary fluid (usually warm water), with the consequent advantages that will be indicated in the following.

After having provided the primary heat carrier fluid within tubes 5, 6, 7 and 9 of the primary heat carrier fluid circulation system 21, secondary fluid is supplied through inlet opening 23 realised in joint 3.

Secondary fluid is inserted both in tubes 2 and in heat exchanger 8 (or, where present, in heat exchangers 8a and 8b).

Heat, irradiated through transparent surface 12 and absorbed by absorber plate 13, heats primary heat carrier fluid within the first absorber tubes 5, that, passing through the first connection element 18, and the check valve 11, if provided, starts circulating within the second tubes 9, exchanging heat with water within heat exchanger 8 (or, where present, within heat exchangers 8a and 8b).

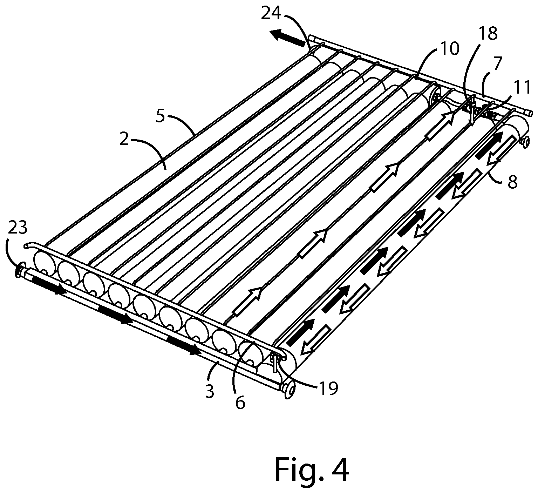

Water, or other secondary fluid, within heat exchanger 8 (or, where present, heat exchangers 8a and 8b), starts raising by natural circulation, reaching, by joints 4, the upper part of tubes 2, thus pushing water contained within the same, in the lower part of the heat exchanger 8 (or, where present, within heat exchangers 8a and 8b), thus obtaining natural circulation and stratified heating of secondary fluid within tubes 2. A diagram explain flow circulation (black arrows indicate secondary fluid flow and white arrows indicate primary heat carrier fluid flow) is shown in figure 4.

In case the user wishes withdrawing hot water from the system, being withdrawal provided in the upper part of the secondary fluid circulation and accumulation circuit 22 from an outlet opening realised in joint 4 (and supply from the lower one by inlet opening 23 of joint 3), even if not all the water has been heated as yet within heat exchanger 8 (or, where present, within heat exchangers 8a and 8b), thermal stratification within tubes 2 permits immediately exploiting already heated water.

Expansion reservoir 10 is provided in order to balance possible volume variations of the primary heat carrier fluid (glycol or other suitable liquid).

Making reference to figures 1 - 17, each solar collector 200 according to the second embodiment, as in solar collector 100 described in the above, provides a containment structure 1, having lower face, four perimeter faces and an open upper face, wherein there are housed: an absorber 13, exposed to the solar irradiation, a primary circuit or primary circulation system 21, within which a primary heat carrier fluid flows, a secondary conduct or secondary circulation system 22, within which a secondary fluid flows, e.g. water, a heat exchange part 8, wherein heat exchange occurs between said primary heat carrier fluid and said secondary fluid, and a transparent surface 12, that can be coupled above said containment element 1, to tighten collector 200 and at the same time to allow irradiation of absorber 13 surface.

Containment structure 1 of solar collector 200 while used is inclined, so as to ease irradiation of upper portion of collector 200 to activate natural circulation of primary heat carrier fluid within said first circuit 21.

Said primary circulation system 21 provides a plurality of first conducts 5, particularly tubes, and a plurality of second conducts 9, particularly tubes, in flow communication with said first conducts 5 within which said primary heat carrier fluid flows. Particularly, said plurality of first conducts 5 are in flow communication each other by an upper manifold 6 and a lower manifold 7 (as a function of the inclination of the collector 200), provided at the ends of said first conducts 5; also said plurality of second conducts 9 are in flow communication each other by an upper manifold 16 and a lower manifold 17 (always as a function of the inclination of the collector 200), provided at the ends of said second conducts 9.

Said primary circulation system 21 further comprises a first connection element 18, that can communicate said upper manifolds 6, 16 of said plurality of first conducts 5 and said plurality of second conducts 9, and a second connection element 19, that can communicate said lower manifolds 7, 17 of said plurality of first conducts 5 and said plurality of second conducts 9.

In the specific embodiment said secondary circulation system 22 comprises a single accumulation reservoir 20, wherein an inlet opening 23 of the secondary fluid and an outlet opening 24 of the secondary fluid are obtained. Particularly, said inlet opening 23 is obtained in the lower portion of said reservoir 20 and said outlet opening 24 is obtained in the upper portion of said reservoir 20. Preferably, said inlet 23 and outlet 24 openings are realised in the same side or on both sides of reservoir 20 (as shown in figures 18a and 18b, in case a plurality of solar collectors are connected each other in order to realise a system 300 comprising a plurality of collectors). Reservoir 20 has a single volume to contain and free flow of said secondary fluid. The above permits a better distribution of temperature within secondary fluid with respect to the division into a plurality of accumulation tubes of the embodiment described in the above.

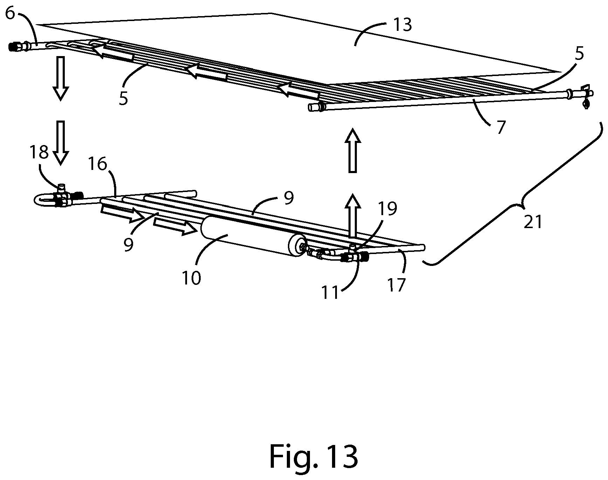

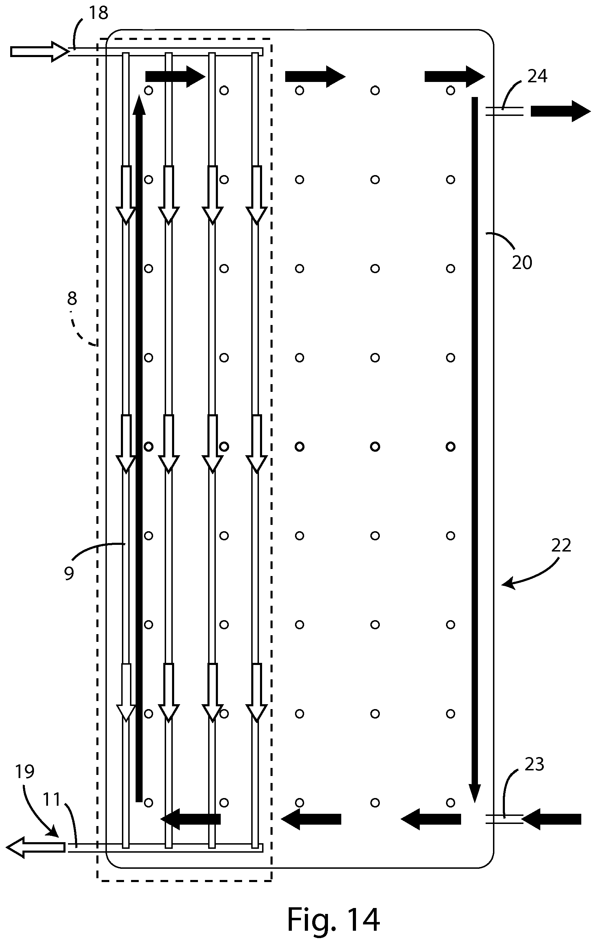

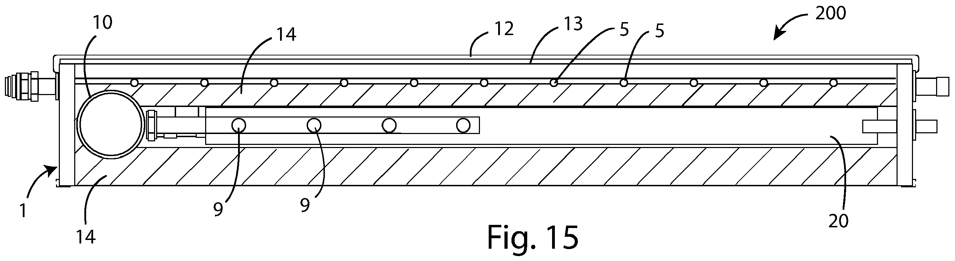

As shown in particular in figure 15, said plurality of first conducts 5 are thermally connected with surface of said absorber 13, while said plurality of second conducts 9 are thermally connected with said secondary circuit 22 close to a heat exchange part 8 (figure 14). Particularly, said second conducts are inserted within said reservoir 20 of said secondary circulation system 22, so that, while used, thermal irradiation absorbed by said absorber 13 is transmitted to said primary circulation system 21. The above involves reduction of density of primary heat carrier fluid part contained within the first conducts 5 and activation of natural circulation of said primary heat carrier fluid that, flowing within said first conducts 5 upwards (as shown in figure 13) is pushed within said second conducts 9 thorough said first connection element 18, counter-current flowing with respect to the flow direction of primary heat carrier fluid within said first conducts 5, particularly downward, until reaching said second connection element 19, and entering within said first conducts. When said primary heat carrier fluid flows within said second conducts 9 into said reservoir 20 of said secondary circulation system 22, in correspondence of said thermal exchange portion, heats secondary fluid contained within reservoir 20, thus activating natural circulation of secondary fluid that, by natural stratification, is pushed to counter-current flow with respect to the primary heat flowing within second conducts 9, particularly upwards.

Thanks to the thermal stratification within the reservoir 20, even if secondary fluid is not fully heated, it is possible immediately withdrawing secondary fluid already heated from upper portion by outlet opening 24.

In case solar irradiation is not present, e.g. overnight or in winter, when temperature remarkably lowers, in order to prevent activation of reverse natural circulation of primary heat carrier within primary circuit 21, a check valve 11 is provided in correspondence of said second connection element 19, preventing flow of primary heat carrier fluid along said direction, that could trigger a cooling cycle of secondary fluid.

Further, just to insulate second circuit 22 from outside, an insulation layer 14 is provided, that can completely wrap secondary circulation circuit 22 with respect to absorber 13 and first conducts 5 of the primary circulation system 21. By the above solution, a complete natural circulation solar system, integrated within collector 100 or 200, without a visible reservoir and with reduced dimensions is obtained, having surface dimensions corresponding to those of a solar collector and a reduced thickness.

Further, by the described solution, it is possible realising a system comprising a plurality of natural circulation solar collectors with solar collectors 100 or 200, without visible reservoirs and with reduced dimensions, having surface dimensions corresponding to those of a solar collector and a reduced thickness; in fact, natural circulation system obtained by the described solution is a modular system, so that single collectors 100 or 200 can be connected in series or in parallel each other, and in both cases stratified heating is obtained of the liquid within the accumulation reservoir.

Further, the inventive system permits installation even on a pitch roof and built-in, thus fulfilling environmental requirements, particularly as a consequence of the absence of the visible reservoir and of the possibility of building-in the same.

Product thus obtained has a better aesthetic aspect with respect to collectors having a reservoir mounted above the collector or hidden behind the same.

Accumulation of secondary fluid and heat exchangers are completely surrounded by insulating material limiting heat dispersion outward; further, provision of check valve reduces risk of reverse circulation, preventing that, with low temperatures and lacking irradiation, cold primary heat carrier fluid contained within absorber from circulating, thus subtracting heat to accumulation of secondary fluid. Further, secondary fluid (water) is protected against the risk of ice formation without requiring a control system, heating (thermostat and resistance) and other power supply.

Thus, under an operative point of view, a higher efficiency is obtained with respect to direct irradiation compact systems, due to a limited heat dispersion (accumulation completely insulated and minimum amount of fluid exposed outward), and the consequent risk of ice formation reduced at the minimum level.

Further, the solution according to the invention can be simply installed in a quick and easy way, being it necessary connecting only the secondary circuit, since primary circuit is integrated, already filled in and including the expansion reservoir.

Thermal exchange occurs, in the inventive solution, preferably only in one or more accumulation vessels, or eventually outside the same vessels, while natural stratification of secondary fluid occurs in other vessels or accumulation reservoirs.

Structure of collector 100 or 200 according to the invention permits connecting accumulation reservoirs to realise a series of reservoirs exchanging energy each other.

Stratification of temperature of accumulation secondary fluid in all the connected reservoirs obtained by the solution according to the invention permits that stratified hot secondary fluid present in the upper part of the reservoirs (from which withdrawal is made) can be immediately used, without needing heating the whole accumulation.

Insulation of the system is unique both for accumulation and absorber. Accumulation is completely insulated and heat dispersion is thus limited, equal to or lower than that of standard natural circulation solar systems.

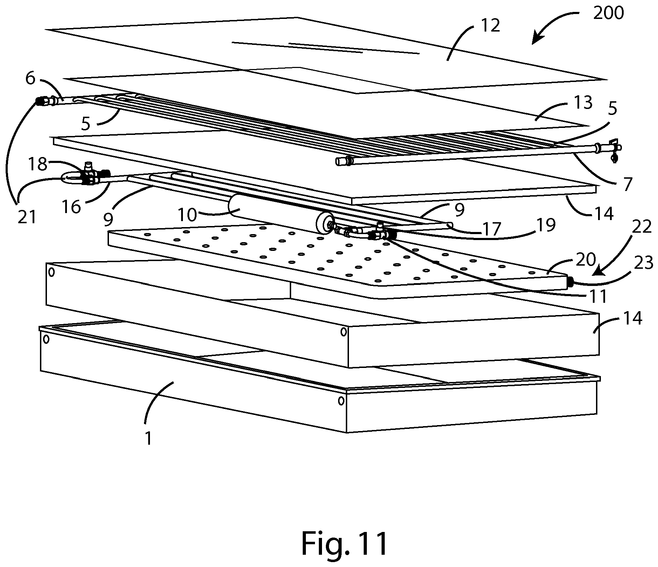

In the specific embodiments described in the above, second portion 9 of primary circuit 21 alternatively extends within a single conduct 8 among the plurality of conducts 2 of the secondary circuit 22 portion (first embodiment shown in figures 1 - 10) or within the accumulation reservoir 20 of the secondary circuit 22 portion, thus occupying a part of the volume (second embodiment shown in figure 11 - 17).

Further, in the specific embodiments described in the above, first portion 5 of primary conduct 21 extends all along the surface of the upper absorber 13, in order to absorb a higher amount of solar irradiation. Particularly, absorber 13 and first portion 5 of primary circuit 21 are welded each other.

The present invention has been described according to tie preferred embodiments, but it is to be understood that variations and/or modifications can be introduced by those skilled in the art, without departing from the relevant scope as defined in the enclosed claims.

## Claims

1. Solar collector comprising a natural circulation solar system (100; 200) within a containment box structure (1), having a lower face, four perimeter faces and an upper face closed by a transparent surface (12), said natural circulation solar system (100; 200) comprising: an upper absorber (5, 13), to be exposed to solar irradiation, provided under said transparent surface (12), an accumulation and natural circulation primary circuit (21) of a primary thermal carrier fluid, at least a secondary abduction, withdrawal and natural circulation conduct (22) of a secondary fluid, and at least a heat exchanger (8) for exchanging heat between said primary heat carrier fluid and said secondary fluid, said at least a secondary conduct (22) comprising at least an inlet opening (23) and an outlet opening (24) of said secondary fluid that can be reached from outside said containment box structure (1), said primary circuit (21) providing at least a first portion (5), thermally communicating with said upper absorber (13) and provided under it, and at least a second portion (9) thermally communicating with said at least a secondary conduct (22) in correspondence of said heat exchanger (8), said second portion (9)
and said at least a secondary conduct (22) being provided under said at least a first portion (5), and an insulating material layer (14) being provided between at least a first portion (5) of said primary circuit (21) and said at least a secondary conduct (22) so that, when said primary heat carrier fluid flows by natural circulation within said primary circuit (21), said primary thermal carrier fluid and said secondary fluid circulate with a counter-current circulation within said heat exchanger (8).

2. Solar collector according to claim 1, **characterised in that** said at least one insulating layer (14) completely wraps said secondary conduct (22) so as to thermally insulate the same.

3. Solar collector according to one of the preceding claims, **characterised in that** said absorber (13) is comprised of thermally conductive material, preferably copper or aluminium.

4. Solar collector according to one of the preceding claims, **characterised in that** said accumulation and natural circulation primary circuit (21) of a primary heat carrier fluid provides an expansion reservoir (10), directly connected to said primary circuit (21).

5. Solar collector according to one of the preceding claims, **characterised in that** said primary circuit (21) provides a check valve (11), preventing said primary thermal carrier fluid circulating according to an opposite direction with respect to the prevailing flow direction.

6. Solar collector according to one of the preceding claims, **characterised in that** said at least a secondary adduction, withdrawal and natural circulation conduct (22) of a secondary fluid can provide a plurality of vessels (2, 8), such as reservoirs, tubes, chambers and like, to accumulate secondary fluid and to let the same passing, and hydraulic connection elements (3, 4) between sand accumulation vessels (2, 8).

7. Solar collector according to one of the preceding claims 1 - 5, **characterised in that** said at least a secondary conduct (22) comprises a single accumulation and passage reservoir (20) for said secondary fluid.

8. Solar collector according to one of the preceding claims, **characterised in that** said primary circuit (21) comprises a plurality of said first portions or conducts (5), manifolds (6, 7) for hydraulic coupling between said plurality of conducts (5) and joint elements (18, 19) for coupling said plurality of first conducts (5) and said at least a second portion (9) of said primary circuit (21).

9. Solar collector according to one of the preceding claims, **characterised in that** said primary circuit (21) comprises a plurality of said second portions or conducts (9), manifolds (16, 17) for hydraulic coupling between said plurality of second conducts (9) and joint elements (18, 19) for coupling said plurality of second conducts (9) and said at least a first portion (5) of said primary circuit (21).

10. Solar collector according to one of the preceding claims, **characterised in that** said at least a second portion (9) of said primary circuit (21) is at least partially inserted within said at least a secondary conduct (22) so as to be in direct thermal contact with said secondary fluid.

11. Solar system (300), **characterized in that** it provides, connected in series and/or in parallel, a plurality of solar collectors according to each one of the preceding claims.

## Patentansprüche

1. Sonnenkollektor, der eine Solaranlage (100; 200) mit natürlicher Zirkulation innerhalb einer Containment-Box-Struktur (1) umfasst, aufweisend eine untere Fläche, vier Umfangsflächen und eine obere Fläche, die durch eine transparente Oberfläche (12) abgeschlossen ist, wobei die Solaranlage (100; 200) mit natürlicher Zirkulation umfasst: einen oberen Absorber (5, 13), welcher Sonnenstrahlung auszusetzen ist, der unter der transparenten Oberfläche (12) bereitgestellt ist, einen Akkumulations- und Primär-Kreislauf (21) mit natürlicher Zirkulation eines primären thermischen Trägerfluids, wenigstens eine sekundäre Ableitungs-, Entnahme- und natürliche Zirkulationsleitung (22) eines sekundären Fluids, und wenigstens einen Wärmetauscher (8) zum Austauschen von Wärme zwischen dem primären Wärmeträgerfluid und dem sekundären Fluid, wobei die wenigstens eine sekundäre Leitung (22) wenigstens eine Einlassöffnung (23) und eine Auslassöffnung (24) des sekundären Fluids umfasst, die von außerhalb der Containment-Box-Struktur (1) erreichbar ist, wobei der Primär-Kreislauf (21) wenigstens einen ersten Abschnitt (5), der thermisch mit dem oberen Absorber (13) kommuniziert und darunter bereitgestellt ist, und wenigstens einen zweiten Abschnitt (9) bereitstellt, der thermisch mit der wenigstens einen sekundären Leitung (22) in Korrespondenz mit dem Wärmetauscher (8) kommuniziert, wobei der zweite Abschnitt (9) und die wenigstens eine sekundäre Leitung (22) unter dem wenigstens einen ersten Abschnitt (5) bereitgestellt sind, und eine isolierende Materialschicht (14) zwischen wenigstens einem ersten Abschnitt (5) des Primär-Kreislaufs (21) und der wenigstens einen sekundären Leitung (22) bereitgestellt ist, so dass, wenn das primäre Wärmeträgerfluid durch natürliche Zirkulation innerhalb des Primär-Kreislaufs (21) fließt, das primäre Wärmeträgerfluid und das sekundäre Fluid mit einer Gegenstrom-Zirkulation innerhalb des Wärmetauschers (8) zirkulieren.

2. Sonnenkollektor nach Anspruch 1, **dadurch gekennzeichnet, dass** wenigstens eine Isolierschicht (14) die sekundäre Leitung (22) völlig umwickelt, um diese thermisch zu isolieren.

3. Sonnenkollektor nach einem der vorhergehenden Ansprüche, **dadurch gekennzeichnet, dass** der Absorber (13) thermisch leitendes Material, vorzugsweise Kupfer oder Aluminium, umfasst.

4. Sonnenkollektor nach einem der vorhergehenden Ansprüche, **dadurch gekennzeichnet, dass** der Akkumulations- und Primär-Kreislauf (21) mit natürlicher Zirkulation eines primären Wärmeträgerfluids ein Expansionsreservoir (10) bereitstellt, das mit dem Primär-Kreislauf (21) direkt verbunden ist.

5. Sonnenkollektor nach einem der vorhergehenden Ansprüche, **dadurch gekennzeichnet**, das der Primär-Kreislauf (21) ein Rückschlagventil (11) bereitstellt, das verhindert, dass das primäre Wärmeträgerfluid gemäß einer entgegengesetzten Richtung in Bezug auf die vorherrschende Fließrichtung zirkuliert.

6. Sonnenkollektor nach einem der vorhergehenden Ansprüche, **dadurch gekennzeichnet, dass** die wenigstens eine sekundäre Ableitungs-, Entnahme- und natürliche Zirkulationsleitung (22) eines sekundären Fluids eine Vielzahl von Behältnissen (2, 8), wie beispielsweise Reservoire, Röhren, Kammern und dergleichen, um sekundäres Fluid zu akkumulieren und dasselbe passieren zu lassen, und hydraulische Verbindungselemente (3, 4) zwischen den Akkumulations-Behältnissen (2, 8) bereitstellen kann.

7. Sonnenkollektor nach einem der vorhergehenden Ansprüche 1 - 5, **dadurch gekennzeichnet, dass** die wenigstens eine sekundäre Leitung (22) ein einziges Akkumulations- und Durchgangsreservoir (20) für das sekundäre Fluid umfasst.

8. Sonnenkollektor nach einem der vorhergehenden Ansprüche, **dadurch gekennzeichnet, dass** der Primär-Kreislauf (21) eine Vielzahl der ersten Abschnitte oder Leitungen (5), Verteilerrohre (6, 7) zum hydraulischen Koppeln zwischen der Vielzahl von Leitungen (5) und Verbindungselementen (18, 19) zum Koppeln der Vielzahl von ersten Leitungen (5) und dem wenigstens einen zweiten Abschnitt (9) des Primär-Kreislaufs (21) umfasst.

9. Sonnenkollektor nach einem der vorhergehenden Ansprüche, **dadurch gekennzeichnet, dass** der Primär-Kreislauf (21) eine Vielzahl der zweiten Abschnitte oder Leitungen (9), Verteilerrohre (16, 17) zum hydraulischen Koppeln zwischen der Vielzahl von zweiten Leitungen (9) und Verbindungselementen (18, 19) zum Koppeln der Vielzahl von zweiten Leitungen (9) und dem wenigstens eines ersten Abschnitts (5) des Primär-Kreislaufs (21) umfasst.

10. Sonnenkollektor nach einem der vorhergehenden Ansprüche, **dadurch gekennzeichnet, dass** der wenigstens eine zweite Abschnitt (9) des Primär-Kreislaufs (21) wenigstens teilweise in die wenigstens eine sekundäre Leitung (22) eingeschoben ist, um in direktem thermischen Kontakt mit dem sekundären Fluid zu sein.

11. Solaranlage (300), **dadurch gekennzeichnet, dass** sie, in Reihe und/oder parallel verbunden, eine Vielzahl von Sonnenkollektoren gemäß jedem der vorhergehenden Ansprüche bereitstellt.

## Revendications

1. Capteur solaire comprenant un système solaire (100; 200) à circulation naturelle au sein d'une structure (1) de confinement en forme de boîte, possédant une face inférieure, quatre faces périmétriques et une face supérieure fermée par une surface transparente (12), ledit système solaire (100 ; 200) à circulation naturelle comprenant : un absorbeur supérieur (5 ; 13) destiné à être exposé au rayonnement solaire, prévu en dessous de ladite surface transparente (12), un circuit primaire (21) d'accumulation et de circulation naturelle, d'un fluide caloporteur primaire, au moins un conduit secondaire (22) d'abduction, de prélèvement et de circulation naturelle, d'un fluide secondaire, et au moins un échangeur de chaleur (8) pour échanger de la chaleur entre ledit fluide caloporteur primaire et ledit fluide secondaire, ledit au moins un conduit secondaire (22) comprenant au moins une ouverture d'entrée (23) et une ouverture de sortie (24) dudit fluide secondaire qui sont accessibles depuis l'extérieur de ladite structure (1) de confinement en forme de boîte, ledit circuit primaire (21) étant muni d'au moins une première portion (5) établissant une communication thermique avec ledit absorbeur supérieur (13) et prévue en dessous de lui, et d'au moins une seconde portion (9) établissant une communication thermique avec ledit au moins un conduit secondaire (22) en fonction dudit échangeur de chaleur (8), ladite seconde portion (9) et ledit au moins un conduit secondaire (22) étant prévus en dessous de ladite au moins une première portion (5), et une couche (14) de matière isolante étant prévue entre au moins une première portion (5) dudit circuit primaire (21) et ledit au moins un conduit secondaire (22) de telle sorte que, lorsque ledit fluide caloporteur primaire s'écoule par circulation naturelle au sein dudit circuit primaire (21), ledit fluide caloporteur primaire et ledit fluide secondaire circulent sous la forme d'une circulation à contre-courant au sein dudit échangeur de chaleur (8).

2. Capteur solaire selon la revendication 1, **caractérisé en ce que** ladite au moins une couche isolante (14) entoure complètement ledit conduit secondaire (22) de façon à conférer une isolation thermique à ce dernier.

3. Capteur solaire selon l'une quelconque des revendications précédentes, **caractérisé en ce que** ledit absorbeur (13) comprend un matériau thermoconducteur, de préférence du cuivre ou de l'aluminium.

4. Capteur solaire selon l'une quelconque des revendications précédentes, **caractérisé en ce que** ledit circuit primaire (21) d'accumulation et de circulation naturelle, d'un fluide caloporteur primaire est muni d'un réservoir (10) d'expansion relié directement audit circuit primaire (21).

5. Capteur solaire selon l'une quelconque des revendications précédentes, **caractérisé en ce que** ledit circuit primaire (21) est muni d'un clapet antiretour (11) qui empêche ledit fluide caloporteur primaire de circuler dans une direction opposée par rapport à la direction d'écoulement prévalente.

6. Capteur solaire selon l'une quelconque des revendications précédentes, **caractérisé en ce que** ledit au moins un conduit secondaire (22) d'abduction, de prélèvement et de circulation naturelle, d'un fluide secondaire peut être muni de plusieurs récipients (2, 8), tels que des réservoirs, des tubes, des chambres et analogues, pour accumuler du fluide secondaire et pour laisser passer ce dernier, et d'éléments (3, 4) de liaison de type hydraulique entre lesdits récipients (2, 8) d'accumulation.

7. Capteur solaire selon l'une quelconque des revendications précédentes 1 à 5, **caractérisé en ce que** ledit au moins un conduit secondaire (22) comprend un réservoir unique (20) d'accumulation et de passage pour ledit fluide secondaire.

8. Capteur solaire selon l'une quelconque des revendications précédentes, **caractérisé en ce que** ledit circuit primaire (21) comprend plusieurs desdites premières portions ou desdits conduits, des collecteurs (6, 7) pour le couplage hydraulique entre lesdits plusieurs conduits (5), et des éléments de jonction (18, 19) pour le couplage desdits plusieurs premiers conduits (5) et de ladite au moins une seconde portion (9) dudit circuit primaire (21).

9. Capteur solaire selon l'une quelconque des revendications précédentes, **caractérisé en ce que** ledit circuit primaire (21) comprend plusieurs desdites premières portions ou desdits conduits (9), des collecteurs (16, 17) pour le couplage hydraulique entre lesdits plusieurs seconds conduits (9) et des éléments de jonction (18, 19) pour le couplage desdits plusieurs seconds conduits (9) et de ladite au moins une première portion (5) dudit circuit primaire (21).

10. Capteur solaire selon l'une quelconque des revendications précédentes, **caractérisé en ce que** ladite au moins une seconde portion (9) dudit circuit primaire (21) est au moins en partie insérée au sein dudit au moins un conduit secondaire (22) de façon à établir un contact thermique direct avec ledit fluide secondaire.

11. Système solaire (300), **caractérisé en ce qu'**il est muni, à l'état monté en série et/ou en parallèle, de plusieurs capteurs solaires selon chacune des revendications précédentes.
